# EUROPÄISCHE PATENTSCHRIFT

(11) **EP 2 258 944 B1**
(45) Veröffentlichungstag und Bekanntmachung des Hinweises auf die Patenterteilung: **14.05.2014**
(21) Anmeldenummer: 10174502.4
(22) Anmeldetag: 29.01.2008
(51) Int. Cl.: F03D 7/06

(54) **Windturbinen-Steuerungsvorrichtung einer Vertikalachsen-Windturbine**
Control system for a vertical axis wind turbine
Système de contrôle pour éolienne à axe verticale

(43) Veröffentlichungstag der Anmeldung: 08.12.2010
(62) Teilanmeldung aus: 08001625.6
(73) Patentinhaber: Colling, Claus, 85408 Gammelsdorf (DE)
(72) Erfinder: Colling, Claus, 85408 Gammelsdorf (DE)
(74) Vertreter: Becker Kurig Straus

(56) Entgegenhaltungen:
- FR-A- 1 006 698
- GB-A- 193 827
- GB-A- 578 676
- GB-A- 1 588 694
- US-A- 2 058 500
- US-A- 2 148 921
- US-A- 2 480 687
- US-A- 2 688 285

## Beschreibung

Die vorliegende Erfindung bezieht sich auf eine Windturbinen-Steuerungsvorrichtung einer Vertikalachsen-Windturbine.

Im Zuge der immer schneller fortschreitenden Entwicklung der Nutzung von Windenergie ist es ein allgemeines Bestreben, Windkraftanlagen bzw. Windkraftsysteme immer effizienter zu gestalten. Allerdings ist die Steuerung von Windkraftsystemen ein großes Problem, egal ob sie als Vertikalachsen-Windturbine 14 (VAWT) oder als Horizontalachsen-Windturbine (HAWT) konstruiert sind. Vor allem bei hohen Windgeschwindigkeiten muss die Rotordrehzahl begrenzt werden, um Beschädigung oder Zerstörung der Windkraftsysteme durch übermäßige Windenergie zu verhindern. Außerdem muss es möglich sein, Windkraftsysteme für Wartungs- und Reparaturarbeiten abzuschalten, auch wenn zur gleichen Zeit Windenergie auf die Windkraftsysteme wirkt. Deshalb ist es wichtig, dass jedes Windkraftsystem eine Bremsvorrichtung beinhaltet. Herkömmliche Bremsen wie z.B. Scheiben- oder Trommelbremsen sind hierfür allerdings nicht geeignet, da sie einen hohen Verschleiß aufweisen. Außerdem muss eine Dauerbremseigenschaft gewährleistet werden. Reibungsbasierende Bremsen können sich bei Dauerbremsung bis zum Bremsausfall aufheizen. Dieses Problem kann im Stand der Technik durch den Einsatz von verschleißfreien Wirbelstrombremsen gelöst werden. Allerdings ergibt sich hierbei das Problem, dass Wirbelstrombremsen keine individuelle Steuerung zulassen und bei Stromausfall wirkungslos sind. Auch Systeme mit verstellbaren Rotorblättern können bei Stromausfall oder Steuerungsausfall nicht mehr aus dem Wind genommen werden, so dass die Windenergie den Rotor weiter antreiben kann. Deshalb besteht ein Bedarf an einer verschleißfreien Vorrichtung zum Steuern und Bremsen von Windkraftanlagen mit einer autonomen Selbstbremsung bzw. Selbstabschaltung bei Defektsituationen. Ein zusätzliches Problem ergibt sich im Stand der Technik, wenn eine Notsituation auftritt, bei der die elektrischen Steuerungsvorrichtungen ausfallen und damit ein Abschalten der VAWT unmöglich wird.

Die US 2 480 687 offenbart eine Windturbinen-Steuerungsvorrichtung gemäß dem Stand der Technik.

### Zusammenfassung

Das Problem der vorliegenden Erfindung besteht darin, eine möglichst günstige Möglichkeit bereitzustellen, die Rotation einer Windturbine 14 (vorzugsweise VAWT) verschleißfrei durch eine Bremse zu steuern, die sich in Defektsituationen ohne äußere Ansteuerung aktivieren und die Windturbine 14 zum stehen bringen kann.

Dieses Problem wird erfindungsgemäß durch die Windturbinen-Steuerungsvorrichtung 1 für eine aerodynamische Bremse gemäß den angehängten Ansprüchen, insbesondere durch Anspruch 1 gelöst. Gemäß der vorliegenden Erfindung wird eine Windturbinen-Steuerungsvorrichtung 1 für eine aerodynamischer Bremse mit mindestens einem Rotorblatt-Segment 6 bereitgestellt, die folgendes umfasst: eine erste Komponente 2, die ein Federelement 3 aufweist, um die aerodynamische Bremse in Richtung einer eingefahrenen Position vorzuspannen; eine zweite Komponente 4, die mindestens ein Massenelement 5 aufweist, um die aerodynamische Bremse durch eine, durch ausreichend hohe Rotation des Rotorblatt-Segments 6 verursachte Zentrifugalkraft gegen die Vorspannung des Federelements 3 auszufahren; eine dritte Komponente 7, die einen Aktuator 8 aufweist, der mit der aerodynamischen Bremse verbunden ist, und der angesteuert werden kann, um die aerodynamische Bremse gegen die Vorspannung des Federelements 3 auszufahren. Die aerodynamische Bremse gemäß einer Ausführungsform der vorliegenden Erfindung ist daher in der Lage, den Drehmomentverlauf einer Windturbine 14 zu beeinflussen.

Die vorliegende Erfindung weist zusätzlich den Vorteil auf, dass es mit dieser Anordnung nicht nur möglich ist, eine Windturbine 14 verschleißfrei zu bremsen, sondern auch ihre Rotationsgeschwindigkeit bei Wind verschleißfrei zu steuern. Infolge dessen ermöglicht die vorliegende Erfindung auch ein Betreiben einer Windturbine 14 bei starken und schnell wechselnden Windverhältnissen (Windrichtung, Böen, etc.), bei denen herkömmliche Windturbinen im Stand der Technik, abgeschaltet werden müssen, um sie vor Beschädigung zu bewahren. Demnach ist die vorliegende Erfindung vorteilhafterweise für den Einsatz in Starkwindanlagen besonders geeignet.
kurze Beschreibung der Zeichnungen
Figur 1 zeigt eine bevorzugte Ausführungsform der Steuerungsvorrichtung 1 gemäß der vorliegenden Erfindung in einer Explosionsansicht ohne Federelement 3.
Figur 2 zeigt eine bevorzugte Ausführungsform der Steuerungsvorrichtung 1 gemäß der vorliegenden Erfindung mit Verbindungselementen 18.
Figur 3 zeigt ein Rotorblatt-Segment 6 mit mehreren gekoppelten Steuerungsvorrichtungen 1 gemäß der vorliegenden Erfindung
Figur 4 zeigt eine bevorzugte Ausführungsform der Steuerungsvorrichtung 1 gemäß der vorliegenden Erfindung, die in ein Rotorblatt-Segment 6 eingebaut ist und von einen Aktuator 8 angesteuert wird.
Figur 5 zeigt das Profil eines Rotorblatt-Segment 6s und eine Luftdruckverteilung beim Bremsen mit der Steuerungsvorrichtung 1 gemäß einer bevorzugten Ausführungsform der der vorliegenden Erfindung.
Figur 6 zeigt das Profil eines Rotorblatt-Segments 6 und eine Luftströmungsverteilung beim Bremsen mit der Steuerungsvorrichtung 1 gemäß einer bevorzugten Ausführungsform der der vorliegenden Erfindung.
Figur 7 zeigt ein Windkraftsystem bzw. eine Windkraftanlage vom Typ Vertikalachsen-Windturbine 14 (VAWT).
Figur 8 zeigt einen Querschnitt im Bereich der Anströmkante 16 des Rotorblattsegments

### Detaillierte Beschreibung

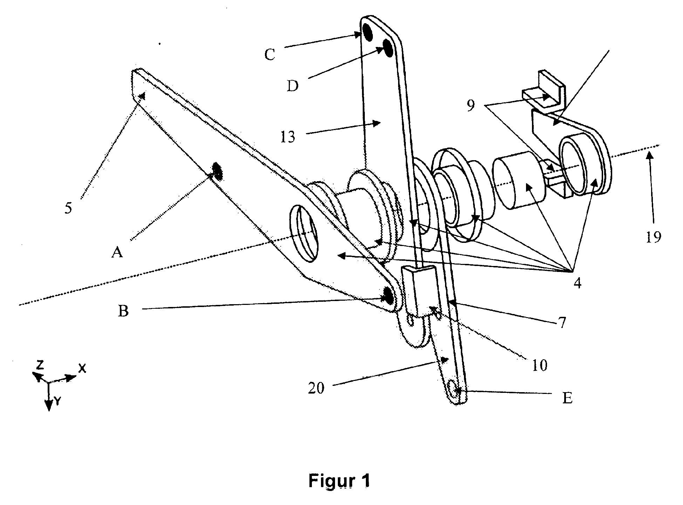

In den Figuren 1, 2, 3 und 4 sind jeweils Raumrichtungen mit drei Achsenrichtungen: x, y und z definiert, um ein leichteres Verständnis der dreidimensionalen Darstellung bereitzustellen. Dabei ist zu beachten, dass die Richtungen über alle Figuren beibehalten sind. Die x-Richtung verläuft vom Profilende 17 in Richtung der Anströmkante 16. Die y-Richtung verläuft radial bezüglich der Rotationsachse der Windturbine 14 (VAWT) nach Außen. Die z-Richtung verläuft entlang der Länge eines Rotorblatt-Segments 6 einer VAWT von unten nach oben, d.h. von dem Fundament der VAWT senkrecht bis hin zum höchsten Punkt der VAWT.

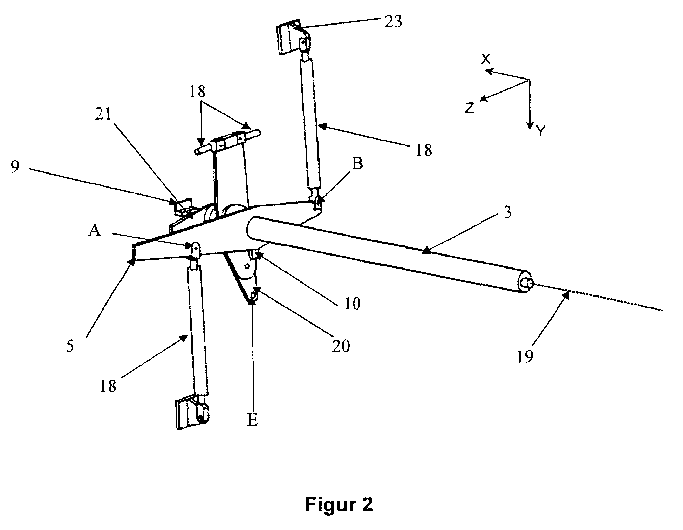

Die Steuerungsvorrichtung 1 gemäß einer Ausführungsform der vorliegenden Erfindung umfasst drei Komponenten. Die erste Komponente 2 umfasst mindestens ein Federelement 3, um die aerodynamische Bremse in Richtung einer eingefahrenen Position vorzuspannen. Somit übt dieses Federelement 3 eine Vorspannkraft auf die aerodynamische Bremse aus. Die eingefahrene Position entspricht einem Nicht-Betätigen der aerodynamischen Bremse. Vorzugsweise ist das Federelement 3 als ein Torsionselement ausgeführt, wie in Fig. 2 zu sehen ist. Dieses Torsionselement wird in einer Ausführungsform der vorliegenden Erfindung (Fig. 2) derart im Rotorblatt-Segment 6 platziert, dass seine Dreh- bzw. Torsionsachse von der Anströmkante 16 zum Profilende 17 des Rotorblatt-Segments 6 verläuft, kann erfindungsgemäß aber auch auf andere Weise eingebaut werden und hängt von den jeweiligen Anforderungen wie z.B. verfügbarer Raum oder bereits vorgegebenen Innenkonstruktionen ab. Diese Vorspannung hält die aerodynamische Bremse in einer eingefahrenen Position, in der keine Bremswirkung entsteht. Allerdings können auch andere Arten von Federelementen 3 benutzt werden, wie z.B. Gasdruckfedern, hydraulische Federn, Blattfedern oder Spiralfedern und sind je nach Anforderung, die an die Windturbine 14 gestellt werden, auszuwählen.

In Figur 1 sind einzelne Teile der zweiten 4 und dritten 7 Komponente einer Ausführungsform der Erfindung gezeigt. Die Pfeile bezüglich der Bezugszeichen 4 und 7 bezeichnen nur die Zugehörigkeit der Teile zu einzelnen Komponenten und die einzelnen Teile, welche deshalb zumeist noch mit teilespezifischen Bezugszeichen versehen sind. Die zweite Komponente 4 umfasst mindestens ein Massenelement 5, um die aerodynamische Bremse durch eine ausreichend hohe Rotation des Rotorblatt-Segments 6 verursachte Zentrifugalkraft gegen die Vorspannung des Federelements 3 auszufahren, wie in Fig. 1 zu sehen ist. In einer bevorzugten Ausführungsform ist das Massenelement 5 derart positioniert, dass die Zentrifugalkraft eine Radialbewegung des Massenelements 5 bezüglich der Rotationsachse der Windturbine 14, d.h. in y-Richtung erzeugt, die über eine erste Teilkomponente, wie z.B. eine Hebelvorrichtung eine Kraft aufbringt, um die aerodynamische Bremse gegen die Vorspannung des Federelements 3 auszufahren.

Die ausgefahrene Position entspricht einem Betätigen der aerodynamischen Bremse (Fig. 1 und Fig. 2). Es ist auch eine Ausführungsform der Erfindung möglich, in der die erste Komponente 2 kein Federelement 3 enthält bzw. die zweite Komponente 4 die Aufgabe der ersten Komponente zusätzlich übernehmen kann. Dazu kann das Massenelement 5 derart positioniert werden, dass die Gewichtskraft des Massenelements 5 die Vorspannung der aerodynamischen Bremse in Richtung einer eingefahrenen Position verursacht, indem über eine Hebelvorrichtung und/oder eine Getriebevorrichtung zur Kraftumsetzung verwendet wird. Somit wirkt die Gewichtskraft des Massenelements 5 in negativer z-Richtung als Vorspannkraft, während die Zentrifugalkraft das Massenelement 5 radial bezüglich der Rotationsachse 15 der Windturbine 14 nach Außen, d.h. in y-Richtung drückt.

Wenn sich die Windturbine 14 dreht, wird das Massenelement 5 durch die Zentrifugalbeschleunigung radial nach Außen (y-Richtung in Fig. 1, 2, 3 und 4) getrieben und fährt dadurch die aerodynamische Bremse aus, die gegen die Drehung der Windturbine 14 arbeitet und diese dadurch bremst. Diese Bewegung des Massenelements wird über die erfindungsgemäße Anordnung einer bevorzugten Ausführungsform auf die aerodynamische Bremse übertragen, wie in Fig. 2 zu sehen ist. Fig. 2 zeigt eine zusammengebaute Ausführungsform der vorliegenden Erfindung inklusive der ersten Komponente, welche das Federelement 3 umfasst. Hier sind Verbindungselemente 18, z.B. Schubstangen, jeweils an den Verbindungspunkten A und B bewegbar derart angebracht, dass beim Bremsen ein Verbindungselement jeweils in y-Richtung und in negativer y-Richtung bewegt wird. Selbstverständlich ist die vorliegende Erfindung nicht auf zwei derartige Schubstangen beschränkt. Es können beliebig viele derartige Schubstangen angebracht werden. Auch eine Ausführungsform mit nur einer einzigen Schubstange ist denkbar. Die aerodynamische Bremse bewirkt bei vollständiger Bremsung (100%) ein nahezu vollständiges Unterbrechen der Antriebsströmung für die Windturbine 14. Dies wird nachfolgend noch detaillierter erläutert.

In einer bevorzugten Ausführungsform weist die zweite Komponente 4 eine erste Teilkomponente 12 mit einem ersten und einem zweiten Ende auf. Die erste Teilkomponente 12 ist zwischen ihrem ersten und zweiten Ende senkrecht zur Rotationsachse 19 des Torsionselements fest mit dem Torsionselement verbunden. Gemäß dieser bevorzugten Ausführungsform umfasst die zweite Komponente 4 weiter eine zweite Teilkomponente 13 mit einem ersten und einem zweiten Ende, wobei die zweite Teilkomponente 13 zwischen seinem ersten und zweiten Ende ebenfalls senkrecht zur Rotationsachse 19 des Torsionselements fest mit dem Torsionselement in analoger Weise wie die erste Teilkomponente 12 verbunden und senkrecht zur ersten Teilkomponente ist (siehe Fig. 1). Die erste und zweite Teilkomponente 12 bzw. 13 können aber auch in anderen Winkelverhältnissen zueinander befestigt sein und die Winkelverhältnisse können vom Fachmann bedarfsabhängig angepasst werden. Sogar eine variable Anpassung der Winkelverhältnisse im laufenden Betrieb der vorliegenden Erfindung ist in einer weiteren Ausführungsform möglich. Diese Teilkomponenten können z.B. Hebelvorrichtungen wie Stangen, Rohre oder Ähnliches sein.

Die erste Komponente 2 ist wirkend mit der zweiten Komponente verbunden. Dabei kann es sich um eine direkte Verbindung handeln indem die erste und die zweite Komponente 4 durch Schweißen, Löten oder Schrauben direkt verbunden werden. Es können aber auch Zwischenelemente 19 zwischen der ersten und der zweiten Komponente eingefügt werden, um eine indirekte Verbindung zwischen der ersten und zweiten Komponente über ein oder mehrere Zwischenelemente 19 herzustellen. Diese Zwischenelemente 19 können z.B. Getriebevorrichtungen sein, die eine Kraftumlenkung bewirken. Demzufolge ist es möglich, dass sich in verschiedenen Ausführungsformen der Erfindung Torsionselement und Massenelement 5 in gleicher Rotationsrichtung oder gegenläufig bewegen können. Die Teilkomponenten müssen nicht zwangsläufig symmetrisch sein.

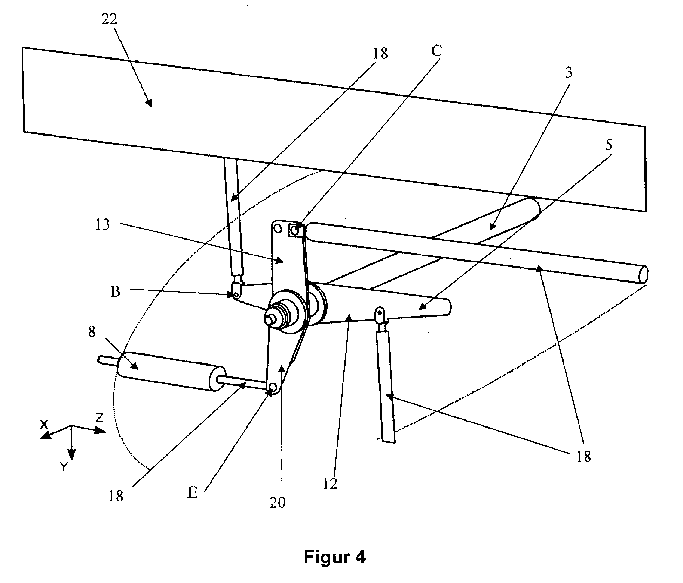

In einer Ausführungsform der Erfindung ist dieses Massenelement 5 vorteilhafterweise direkt auf dem ersten Ende der zweiten Teilkomponente angebracht (Fig. 1 und Fig. 4). Das Massenelement 5 kann aber auch durch Form und Materialwahl der ersten Teilkomponente selbst bereitgestellt werden, so dass kein zusätzliches Massebauteil an der zweiten Teilkomponente angebracht werden muss. Wenn die Windturbine 14 in Betrieb ist, wird durch dieses Massenelement 5 erfindungsgemäß mechanische Energie gespeichert, da durch die Rotation der Windturbine 14 eine Zentrifugalkraft bzw. Zentrifugalbeschleunigung auf dieses Massenelement 5 wirkt, die versucht, das Massenelement 5 radial bezüglich der Rotationsachse 15 der Windturbine 14 nach Außen (y-Richtung) zu beschleunigen.

Die dritte Komponente 7 umfasst einen Aktuator 8 (Fig. 1 und 4), der mit der aerodynamischen Bremse verbunden ist, und der angesteuert werden kann, um die aerodynamische Bremse gegen die Vorspannung des Federelements 3 bzw. gegen die Vorspannung durch die Gewichtskraft des Massenelement 5s gemäß zuvor erwähnten Ausführungsform auszufahren. Diese dritte Komponente 7 kann so angesteuert werden, dass die aerodynamische Bremse mittels einer Kopplungsvorrichtung 10, die nachstehend genauer beschrieben wird, in ausgefahrener Position, in eingefahrener Position und in jeder Zwischenposition zwischen ausgefahrener und eingefahrener Position bewegt und gehalten werden kann. Die Zwischenpositionen stellen damit eine wahlweise einstellbare aerodynamische Teilbremsung (zwischen 0% und 100%, wobei 0% der vollständig eingefahrenen Position und 100% der vollständig ausgefahrenen Position entspricht) der Windturbine 14 dar, während die vollständig ausgefahrene aerodynamische Bremse eine vollständige aerodynamische Bremsung der Windturbine 14 darstellt. Der Aktuator 8 weist in einer bevorzugten Ausführungsform einen Stellmotor 11 auf, der über mindestens ein Verbindungselement 18, z.B. eine Schubstange, an mindestes einem Hebelarm 20 befestigt ist. In der bevorzugten Ausführungsform ist dieser Hebelarm 20 drehbar auf dem Torsionselement gelagert, wie in Figur 4 zu sehen ist.

Die dritte Komponente 7 kann auch ein Rückstellelement (nicht gezeigt) aufweisen, das den Aktuator 8 veranlasst, die aerodynamische Bremse gegen die Vorspannung des Federelement 3s auszufahren, wenn der Aktuator 8 nicht angesteuert werden kann oder einen Defekt aufweist. Dies ist vor Allem für die Situation vorgesehen, dass keine Zentrifugalkraft zur Verfügung steht, um die aerodynamische Bremse gegen die Vorspannung des Federelements 3 auszufahren, d.h. wenn die Windturbine 14 nicht rotiert. Bei diesem Rückstellelement kann es sich z.B. um ein weiteres Federelement handeln.

Erste, zweite und dritte Komponente 7 können mit Begrenzern 9 versehen sein, welche die Bewegungsfreiheit der einzelnen Komponenten auf einen vorher festgelegten Einstellungsbereich begrenzen. Je nach Ausführungsform können ein oder mehrere Begrenzer 9 an einer oder mehreren Komponenten verwendet werden. Die bevorzugte Ausführungsform, z.B. in Fig. 1 und 2 weist Begrenzer 9 für die zweite Komponente 4 auf, welche die maximal möglichen Einstellungen der zweiten Komponente, und, durch deren feste Verbindung mit der ersten Komponente, auch die maximal möglichen Einstellungen der ersten Komponente definieren. Dazu beinhaltet die zweite Komponente 4, wie in Fig. 1 zu sehen ist, einen Anschlagarm 21. Dieser Anschlagarm 21 stößt an den vorher festgelegten Positionen der Begrenzer 9 gegen eben diese Begrenzer 9 und sorgt somit dafür, dass der Bewegungsfreiraum der zweiten Komponente begrenzt ist. Das Federelement 3 sorgt dafür, dass in der eingefahrenen Position der Anschlagarm 21 gegen den dazugehörigen Begrenzer 9 gedrückt wird. Dieser Anschlagarm 21 kann auch für jede Komponente der vorliegenden Erfindung bereitgestellt werden. Die Teilkomponenten können selber als Anschlagarm 21 für Begrenzer 9 dienen, so dass darüber hinaus ein Anschlagarm 21 als Zusatzbauteil wie in der bevorzugten Ausführungsform aus Fig. 1 entfallen kann.

Um eine wirkende Verbindung zwischen der zweiten Komponente und der dritten Komponente 7 bereitzustellen wird erfindungsgemäß eine Kopplungsvorrichtung 10 bereitgestellt. In einer bevorzugten Ausführungsform der Erfindung ist diese Kopplungsvorrichtung 10 an der zweiten Komponente angebracht, um die zweite und dritte Komponente 7 wahlweise zu koppeln oder zu entkoppeln. Wie in Fig. 1 zu sehen ist, ist die Kopplungsvorrichtung 10 gemäß der vorliegenden Erfindung am zweiten Ende der zweiten Teilkomponente angebracht, und verbindet dadurch die zweite Teilkomponente 13 wirkend mit dem Aktuator 8 der dritten Komponente 7. Gemäß einer anderen bevorzugten Ausführungsform kann die Kopplungsvorrichtung 10 auch an der dritten Komponente 7, oder genauer am Hebelarm 20 des Aktuator 8, platziert sein, um die dritte Komponente 7 mit der zweiten Komponente wirkend wahlweise zu koppeln oder zu entkoppeln. Wenn die Kopplungsvorrichtung 10 sich an der zweiten Komponente befindet, kann die dritte Komponente 7 ein entsprechendes Gegenstück aufweisen, um die Kopplung zu sichern. Im umgekehrten Fall gilt Entsprechendes. Dieses Gegenstück ist dementsprechend Teil der Kopplungsvorrichtung 10.

Diese Kopplungsvorrichtung 10 ist in der Lage, die Verbindung zwischen erster 2 und zweiter 4 Komponente einerseits, und der dritten Komponente 7 andererseits, zu lösen und wiederherzustellen.

Solange die Kopplungsvorrichtung 10 die Verbindung zwischen erster und zweiter Komponente auf der einen Seite und dritter Komponente auf der anderen Seite aufrecht erhält, übt die dritte Komponente 7 eine einstellbare bzw. steuerbare Kraft auf die erste 2 und zweite Komponente 4 aus, so dass es dem Massenelement 5 trotz der durch Rotation der Windturbine 14 entstehenden Zentrifugalbeschleunigung bzw. Zentrifugalkraft, nicht möglich ist, die Vorspannkraft des Federelement 3s zu überdrücken. Das Bewegungsverhalten und die jeweilige Position der aerodynamischen Bremse wird von dem Aktuator 8 dominiert bzw. bestimmt. Wenn sich die aerodynamische Bremse in einer Zwischenstellung zwischen ausgefahrener und eingefahrener Position befindet, wird diese Position durch die dritte Komponente 7, die den Aktuator 8 umfasst, gehalten ohne dass es dem Massenelement 5 möglich ist, die aerodynamische Bremse durch die bei Rotation der Windturbine 14 herrschende Zentrifugalkraft in die ausgefahrene Position zu bringen. Die dritte Komponente 7 ist damit derart ausgelegt, dass sie entgegen der Wirkungen von Federelement 3 bzw. Gewichtskraft und Zentrifugalkraft des Massenelements 5 jede mögliche Positionierung der aerodynamischen Bremse einstellen und halten kann, solange die Kopplungsvorrichtung 10 die Verbindung zwischen erster und zweiter Komponente auf der einen Seite und dritter Komponente auf der anderen Seite aufrechterhält. Anders gesagt, wird damit sichergestellt, dass die Steuerung der aerodynamischen Bremse ausschließlich durch die dritte Komponente 7 erfolgt, solange die Kopplungsvorrichtung 10 die Verbindung zwischen erster und zweiter Komponente auf der einen Seite und dritter Komponente auf der anderen Seite aufrechterhält.

Wenn die Kopplungsvorrichtung 10 die Verbindung zwischen erster und zweiter Komponente auf der einen Seite und dritter Komponente auf der anderen Seite aufhebt bzw. die dritte Komponente 7 von den anderen Komponenten entkoppelt, wird die positionsbestimmende Wirkung der dritten Komponente aufgehoben, die, wie zuvor erwähnt, über die Kopplungsvorrichtung 10 auf die anderen Komponenten übertragen wird. In diesem entkoppelten Zustand wird das Massenelement 5 der zweiten Komponente nicht mehr von der dritten Komponente festgehalten. Damit wird die, bei Rotation der Windturbine 14 bestehende Zentrifugalkraft, bzw. Zentrifugalbeschleunigung das Massenelement 5 radial bezüglich der Rotation der Windturbine 14 nach Außen bewegen (y-Richtung). Da dieses Massenelement 5 durch die Zentrifugalkraft die Wirkung des Federelements 3 überdrücken kann, wird die aerodynamische Bremse in dieser Situation dazu veranlasst, sich von der momentanen Position, d.h. von der eingefahrenen Position oder irgendeiner Zwischenposition, sich in die vollständig ausgefahrene Position zu bewegen. Dadurch wird die aerodynamische Bremse vollständig aktiviert, die Antriebsströmung der Windturbine 14 im besten Falle vollständig unterbrochen und die Rotation der Windturbine 14 verlangsamt sich bis hin zum Stillstand.

Diese Entkopplung der dritten Komponente von den anderen Komponenten kann durch verschiedene Gegebenheiten ausgelöst werden. Beispielsweise kann manuell ein Schalter oder Knopf betätigt werden, der das Entkoppeln verursacht. Ebenso ist es möglich, dieses Entkoppeln durch Befehle einer elektronischen Steuerung oder eines Computers zu verursachen. In einer Ausführungsform der Erfindung wird dieses Entkoppeln durch eine Stromunterbrechung verursacht, die eintritt, sobald ein Fehler, ein Defekt oder ein Versagen irgendeiner Komponente der VAWT eintritt. Damit wird ein automatisches Notabschalten der Rotation der Windturbine 14 bewirkt, ohne dass ein aktiver Befehl durch einen Bediener oder einer Software gegeben werden muss. Gemäß anderer Ausführungsformen der Erfindung ist es auch vorgesehen, dieses Entkoppeln durch verschiedene Gegebenheiten auszulösen. Die Kopplungsvorrichtung 10 kann sowohl durch manuelles Schalten, durch elektronische Befehle als auch selbstständig betätigt werden. In der bevorzugten Ausführungsform der Erfindung umfasst die Kopplungsvorrichtung 10 eine magnetische Kopplung. Dabei wird dauerhaft mindestens ein Elektromagnet mit Strom versorgt, um die Kopplung bzw. Verbindung zwischen erster und zweiter Komponente auf der einen Seite und dritter Komponente auf der anderen Seite aufrechtzuerhalten. Sobald der Strom unterbrochen wird, bricht das dadurch erzeugte Magnetfeld zusammen, löst die Kopplung bzw. Verbindung und die dritte Komponente 7 bzw. der Aktuator 8 verliert seinen dominierenden Einfluss auf die Position der aerodynamischen Bremse, d.h. Aktuator 8 und aerodynamische Bremse sind entkoppelt. Infolge dessen, wird die im Massenelement 5 gespeicherte kinetische Energie freigesetzt und dadurch die aerodynamische Bremse ausgefahren.

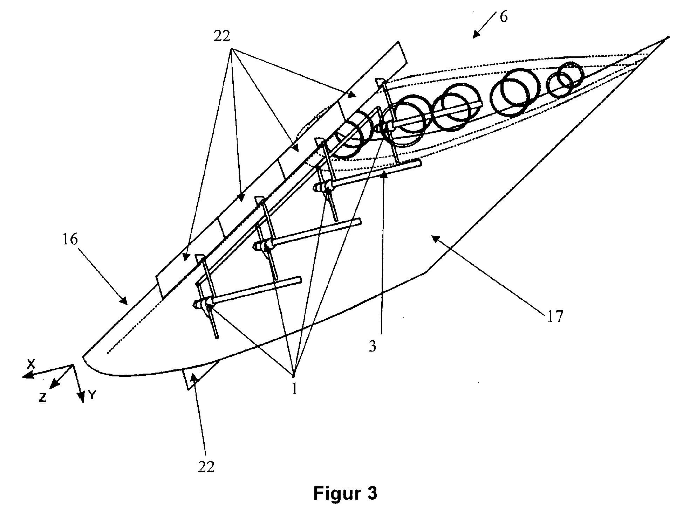

Die aerodynamische Bremse gemäß der vorliegenden Erfindung umfasst mindestens eine Klappvorrichtung bzw. eine Schildflächenvorrichtung, die an einem Rotorblatt-Segment 6 einer Windturbine 14 angebracht ist und mit der Steuerungsvorrichtung 1 über mindestens ein Verbindungselement 18 und/oder mindestens eine Scharniervorrichtung 23 verbunden ist. Vorzugsweise ist dieses Verbindungselement 18 ein Rohr- oder Stangenelement. Diese Klappvorrichtung ist in einer Ausführungsform ein Windschild bzw. Strömungsschild 22, das mit einer Ebene bzw. Oberfläche so in die Antriebsströmung gestellt werden kann, dass die Antriebsströmung bei vollständiger Bremsung im Wesentlichen unterbrochen wird. Es kann gemäß der vorliegenden Erfindung auch ein Strömungsschild 22 bereitgestellt sein, das direkt aus dem Innenraum des Rotorblatt-Segments 6 in einem bestimmten Winkel zum Rotorblatt-Segment herausgedrückt wird. In einer solchen Ausführungsform wäre keine Scharniervorrichtung 23 nötig. Bei einer Teilbremsung, was einem Steuern des Drehmomentverlaufs der Windturbine 14 entspricht, wird die Antriebsströmung wahlweise beeinflusst. Vorzugsweise wird die Oberfläche derart in die Antriebsströmung gestellt, dass die Antriebsströmung möglichst senkrecht auf die Oberfläche trifft, um einen möglichst großen Strömungswiderstand zu erreichen, wenn die Windturbine 14 einer vollständigen Bremsung unterliegen soll. Im Falle einer Teilbremsung wird dieses Strömungsschild 22 selbstverständlich nur teilweise ausgeklappt. In einer Ausführungsform der Erfindung umfasst die Klappenvorrichtung zwei Strömungsschilde 22 pro Steuerungsvorrichtung 1. Es ist aber auch nur ein Strömungsschild 22 oder mehrere Strömungsschilde 22 pro Steuerungsvorrichtung möglich. Diese Ausführungsform, wie sie in Fig. 3 und 4 zu sehen ist, umfasst ein inneres und ein äußeres Strömungsschild 22. Alle Strömungsschilde 22 der aerodynamischen Bremse sind mit deren dazugehörigen Steuerungsvorrichtungen 1 derart verbunden, dass die in der eingefahrenen Position eng an der Oberfläche des Rotorblatt-Segments 6 anliegen, d.h. eingefahren sind, und in der ausgefahrenen Position mit ihrer Oberfläche im Wesentlichen senkrecht bezüglich der Antriebsströmung sind. Gemäß einer Ausführungsform der Erfindung werden bei einem Bremsvorgang gegenüberliegende Strömungsschilde 22 gegensätzlich zu einander ausgefahren um, da sie auf gegenüberliegenden Seiten des Rotorblatts angebracht sind, um auf der jeweiligen Seite die Antriebsströmung zu beeinflussen. Es ist auch möglich, dass die Strömungsschilde 22 in einer Vertiefung des Rotorblatt-Segments 6 in der eingefahrenen Position platziert sind und beim Ausfahren diese Vertiefung zumindest teilweise verlassen. In einer bevorzugten Ausführungsform sind mehrere Strömungsschilde 22 über verbundene Teilkomponenten, wie z.B. die zweite Teilkomponente 13 derart miteinander verbunden, dass die Bewegungen der Strömungsschilde 22 gleichförmig und/oder symmetrisch sind. Die Strömungsschilde 22 können aber auch derart über verbundene Teilkomponenten miteinander verbunden sein, dass deren Bewegung asymmetrisch gekoppelt ist, d.h. dass die Strömungsschilde 22 gleichzeitig oder auch zeitversetzt in Positionen ausgefahren werden, die sich voneinander unterscheiden. Dazu nötige mechanische Hebelumsetzungen sind dem Fachmann bekannt und werden hier nicht näher erläutert.

In der Ausführungsform in Fig. 3 wird die aerodynamische Bremse bzw. werden die Strömungsschilde 22 symmetrisch bewegt. Es ist erfindungsgemäß aber auch möglich, die Strömungsschilde 22 asymmetrisch zueinander zu bewegen. Dies kann bedarfsabhängig leicht eingestellt werden, indem verschiedene Längen der Verbindungselemente 18 oder verschiedene Übersetzungen verwendet werden, z.B. können dazu in dieser Ausführungsform die Verbindungselemente 18 in unterschiedlichem Abstand zum Federelement 3 (hier ein Torsionselement) an der zweiten Komponente angebracht werden.

Erfindungsgemäß können auch mehrere Steuerungsvorrichtungen 1 gekoppelt betrieben werden, wie in Fig. 3 zu sehen ist. Diese sind über Verbindungselemente 18 miteinander verbunden, die bewegbar an der jeweiligen Steuerungsvorrichtung 1 angebracht werden. In der bevorzugten Ausführungsform sind Verbindungselemente 18 an den Punkten C und D mit der zweiten Komponente 4 verbunden. Damit kann das Ausfahren und Einfahren eines Strömungsschildes 22 oder Strömungsschildpaares 22 der aerodynamischen Bremse auf weitere Strömungsschilde 22 übertragen werden.

Ein Rotorblatt-Segment 6 kann somit auch mehrere Steuerungsvorrichtungen 1 gemäß der vorliegenden Erfindung beinhalten. Außerdem kann ein Rotorblatt aus mehreren Rotorblatt-Segmenten 6 bestehen, die Steuerungsvorrichtungen 1 gemäß der vorliegenden Erfindung beinhalten. Rotorblätter mit Steuerungsvorrichtungen 1 gemäß der vorliegenden Erfindung sind für Horizontalachsen-Windturbinen 14 und Vertikalachsen-Windturbinen 14 vorgesehen, können aber auch in anderen Bereichen eingesetzt werden.

Insgesamt wird demzufolge auch ein erfindungsgemäßes Steuerungsverfahren zum aerodynamischen Bremsen eines Windkraftsystems mit einer Steuerungsvorrichtung 1 gemäß Anspruch 1 bis XXX offenbart. Dieses Bremsverfahren kann manuell von einem Bediener, elektronisch von z.B. einem Computer oder auch selbstständig ausgelöst werden. Dem selbstständigen Auslösen basiert auf einem Defekt oder einer Fehlfunktion im Windkraftsystem. Das erfindungsgemäße Verfahren umfasst zuerst ein Entkoppeln der zweiten Komponente vom der dritten Komponente. Vorzugsweise geschieht dies über eine Kopplungsvorrichtung 10, z.B. eine Magnetkopplung. In einer Ausführungsform der Erfindung wird eine Magnetkopplung ständig mit elektrischem Strom versorgt, um die Kopplung zwischen zweiter und dritter Komponente aufrechtzuerhalten. Bei einem Defekt oder einer Fehlfunktion im Windkraftsystem, insbesondere der Steuerungsvorrichtung 1 ist die Stromversorgung unterbrochen und die Kopplung zwischen zweiter und dritter Komponente wird aufgehoben und die zweite und dritte Komponente 7 werden entkoppelt.

In Reaktion auf das Entkoppeln von zweiter und dritter Komponente wird die aerodynamische Bremse im Wesentlichen in die Position bis senkrecht zur Rotationsrichtung des Rotorblatt-Segments 6 durch Bewegen der zweiten Komponente mittels Zentrifugalkraft ausgefahren. Genauer gesagt werden die Strömungsschilde 22 derart in den Wind gestellt, dass sie möglichst senkrecht zur Antriebsströmung des Windes stehen. Daraufhin werden die Strömungseigenschaften des Rotorblatt-Segments 6 derart verändert, dass die Antriebsströmung des Windkraftsystems unterbrochen wird. Durch den Wegfall der Antriebsströmung kann die Windturbine 14 keine Windenergie mehr aufnehmen. Zusätzlich bilden die senkrecht zur Antriebsströmung des Windes gestellten Strömungsschilde 22 ein Hindernis für die Windströmung, so dass dadurch die Rotation der Windturbine 14 gebremst wird. Dies kann bis zum völligen Erliegen der Rotation führen, was in ein Abschalten des Windkraftsystems mündet. Selbstverständlich sind alle Ausführungsformen der vorliegenden Erfindung untereinander kombinierbar.

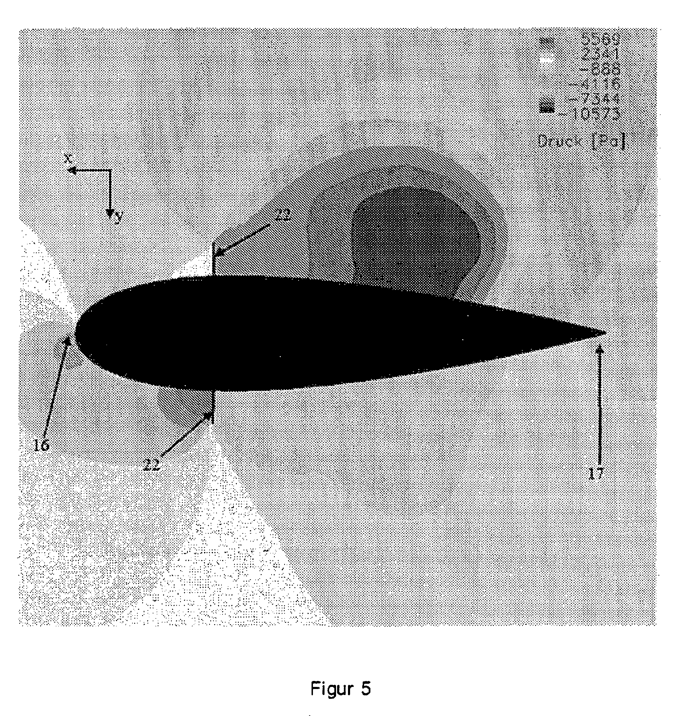

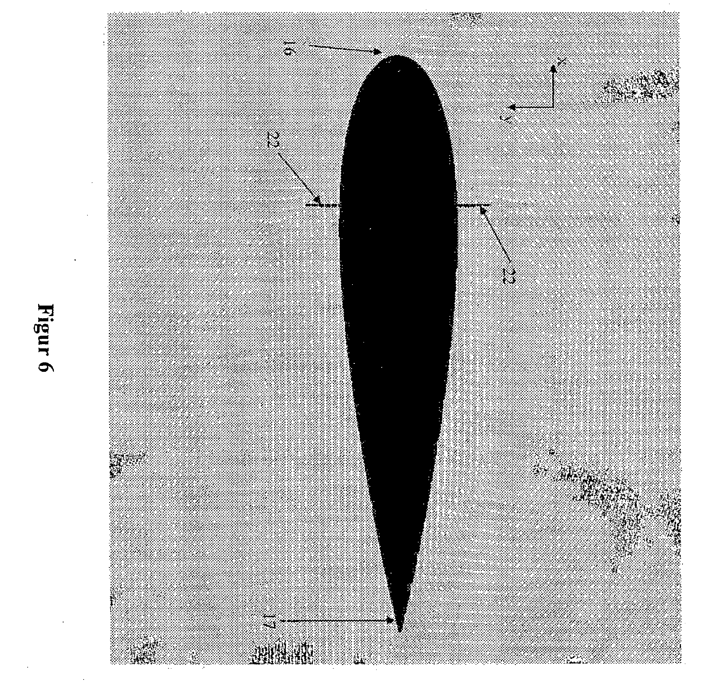

Fig. 5 und Fig. 6 veranschaulichen die Bremswirkung der aerodynamischen Bremse gemäß einer Ausführungsform der vorliegenden Erfindung. In beiden Figuren ist das Profil eines Rotorblatt-Segments 6 dargestellt. Fig. 5 zeigt eine Luftdruckverteilung und Fig. 6 zeigt eine Luftströmungsverteilung in einer Bremssituation. In Fig. 6 ist deutlich zu sehen dass die Strömungsschilde 22 eine Barriere für die Antriebsströmung aus Richtung der Anströmkante 16 bildet, so dass die Antriebsströmung unterbrochen wird, und im Bereich hinter dem Strömungsschild 22 bzw. am Profilende 17 eine Strömungsumkehr stattfindet. Das Rotorblatt-Segment 6 kann damit keine Windenergie mehr in Rotationsenergie umwandeln. Die Luftdruckverteilung in Fig. 5 zeigt, dass hinter dem Strömungsschild 22 bzw. am Profilende 17 ein negativer Luftdruck im Vergleich zum Umgebungsdruck als Null-Niveau herrscht, dessen Kraftwirkung gegen die Bewegungsrichtung des Rotorblatt-Segments 6 wirkt. Vor dem Strömungsschild 22 und an der Anströmkante 16 hingegen baut sich ein positiver Luftdruck bzw. ein Überdruck im Vergleich zum Umgebungsdruck als Null-Niveau auf. Dieser wirkt ebenfalls gegen die Bewegungsrichtung des Rotorblatt-Segments 6. Dadurch wird die Rotation des Rotorblatt-Segments 6 gebremst. Selbstverständlich können alle Ausführungsformen der vorliegenden Erfindung miteinander kombiniert werden.

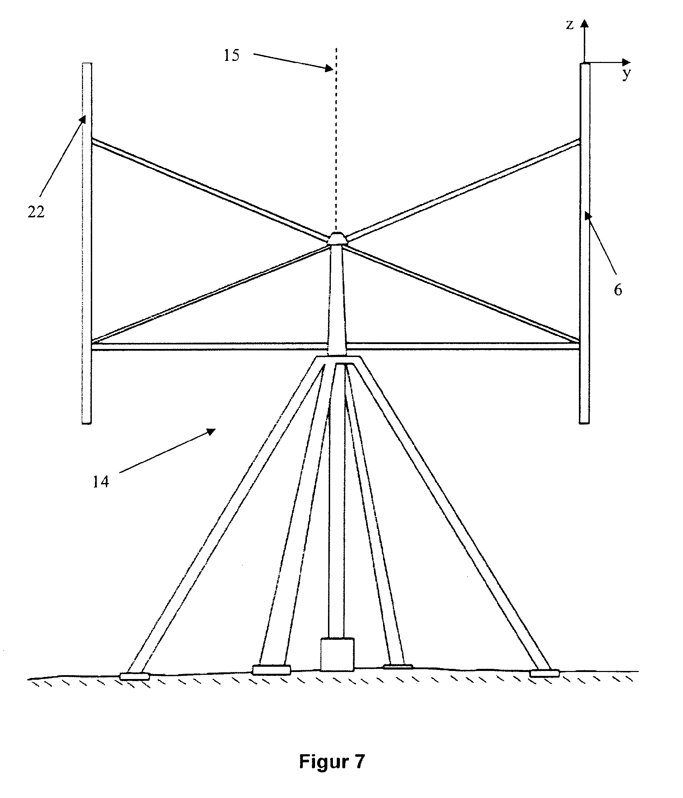

Ein Windkraftsystem gemäß der vorliegenden Erfindung umfasst mindestens ein Rotor mit mindestens einem Rotorblatt-Segment 6, das eine erfindungsgemäße Steuerungsvorrichtung 1 für eine aerodynamische Bremse beinhaltet, und mindestens eine Energie-Umwandlervorrichtung. Diese Energie-Umwandlervorrichtung kann z.B. ein Generator sein, der mechanische Energie, die durch Rotation eines Rotors, der mindestens ein Rotorblatt-Segment 6 umfasst, bereitgestellt ist, in elektrische Energie umwandelt. Diese Energie-Umwandlervorrichtung kann aber auch ein anderes Gerät wie z.B. eine Pumpe, ein Mahlwerk oder ähnliches sein. Figur 7 zeigt eine Windkraftanlage bzw. ein Windkraftsystem vom Typ Vertikalachsen-Windturbine 14 (VAWT), das mit einer erfindungsgemäßen Steuerungsvorrichtung 1 ausgestattet ist.

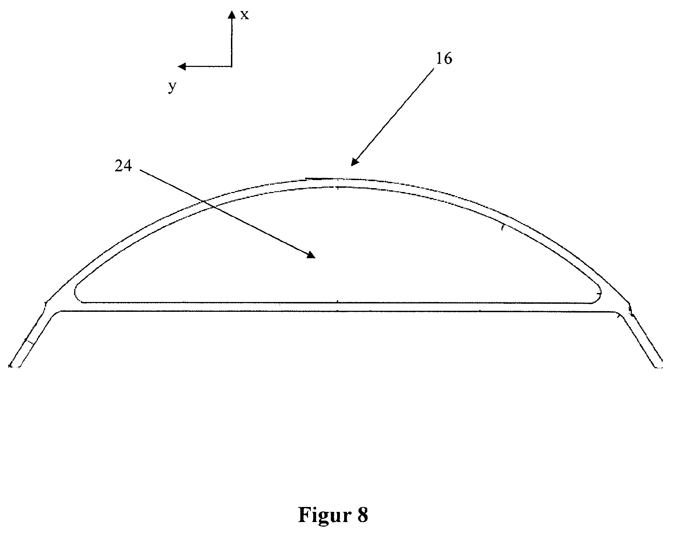

Außerdem ist in dem erfindungsgemäßen Windkraftsystem eine Heizvorrichtung bereitgestellt. Diese Heizvorrichtung (Fig. 8) leitet einen Teil der Energie, welche die Energie-Umwandlervorrichtung bereitstellt in den Innenraum mindestens eines Rotorblatt-Segments 6, um mindestens ein Rotorblatt-Segment 6 zu heizen. Vorzugsweise wird von der Energie-Umwandlervorrichtung überschüssige Wärmeenergie abgeführt und direkt in de Innenraum von mindestens einem Rotorblattsegment geleitet. Gemäß einer Ausführungsform wird die Wärmeenergie nur an der Innenseite der Anströmkante 16 (Fig. 8) entlang geleitet, d.h. im vorderen Innenraumbereich 24 eines Rotorblatt-Segments 6 da die Eisbildung bekannterweise auf der Anströmkante 16 am stärksten ausgeprägt ist. Wenn es sich bei dieser Energie-Umwandlervorrichtung um einen Generator handelt, kann auch elektrische Energie des Generators genutzt werden, um den Innenraum mindestens eines Rotorblatt-Segments 6 zu heizen, wenn man damit im Innenraum eines Rotorblatt-Segments 6 eine elektrische Heizvorrichtung betreibt. Selbstverständlich können alle anwendbaren Energiearten zum Heizen des Innenraums eines Rotorblatt-Segments 6 verwendet und miteinander kombiniert werden, um für die Einzelanwendung ein optimales Heizen des Innenraums eines Rotorblatt-Segments 6 zu erreichen.

Alle zuvor beschriebenen Ausführungsformen, Varianten und Teilbereiche der vorliegenden Erfindung können miteinander kombiniert werden. Es können auch mehrere Steuerungsvorrichtungen 1 gemäß der vorliegenden Erfindung in Windturbinen 14 verwendet werden, die einzeln oder gekoppelt betrieben werden können. Auch können Steuerungsvorrichtungen 1 gemäß der vorliegenden Erfindung unabhängig voneinander in einer Windturbine 14 betrieben werden.

Obwohl Ausführungsformen der vorliegenden Erfindung beispielhaft beschrieben wurden, sollen sie nicht so interpretiert werden, den Schutzbereich der angehängten Ansprüche darauf zu beschränken. Fachleute werden verstehen, dass verschiedene Modifikationen und Variationen an den beschriebenen Ausführungsformen vorgenommen werden können und dass zahlreiche andere Konfigurationen oder Kombinationen jeder dieser Ausführungsformen in der Lage sind, das gleiche Ergebnis zu erzielen, ohne den Schutzumfang der vorliegenden Ansprüche dieser Erfindung zu verlassen. Vielmehr wird die vorliegende Erfindung selbst den Fachleuten Lösungen anderer Aufgaben und Anpassungen für andere Anwendungen nahe legen. Es ist im Sinne des Anmelders alle derartigen Verwendungen der vorliegenden Erfindung und Änderungen und Modifikationen durch die angehängten Ansprüche zu überdecken, die an den Ausführungsformen, die zum Zwecke der Offenbarung der vorliegenden Erfindung vorgenommen werden könnten, ohne vom Wesen und Schutzumfang der vorliegenden Erfindung abzuweichen.

### Bezugszeichenliste:

- 1: Steuerungsvorrichtung
- 2: erste Komponente
- 3: Federelement
- 4: zweite Komponente
- 5: Massenelement
- 6: Rotorblatt-Segment
- 7: dritte Komponente
- 8: Aktuator
- 9: Begrenzer
- 10: Kopplungsvorrichtung
- 11: Stellmotor
- 12: erste Teilkomponente
- 13: zweite Teilkomponente
- 14: Windturbine
- 15: Rotationsachse
- 16: Anströmkante
- 17: Profilende
- 18: Verbindungselement
- 19: Rotationsachse des Torsionselements
- 20: Hebelarm
- 21: Anschlagarm
- 22: Strömungsschild 22
- 23: Scharniervorrichtung
- A: Verbindungspunkt für ein Verbindungselement 18 zwischen 4 und 22
- B: Verbindungspunkt für ein Verbindungselement 18 zwischen 4 und 22
- C: Verbindungspunkt für ein Verbindungselement 18 zwischen benachbarten Steuerungselementen 1
- D: Verbindungspunkt für ein Verbindungselement 18 zwischen benachbarten Steuerungselementen 1
- E: Verbindungspunkt für ein Verbindungselement 18 zwischen 20 und 11

## Patentansprüche

1. Windturbinen-Steuerungsvorrichtung einer Vertikalachsen-Windturbine mit mindestens einem Rotorblattsegment (6), umfassend in:
ein Federelement (3);
mindestens ein Massenelement (5) auf einer ersten Teilkomponente (12), wobei die erste Teilkomponente (12) drehbar um eine Rotationsachse (19) gelagert ist;
mindestens zwei Verbindungspunkte (A, B) auf der ersten Teilkomponente (12), an denen jeweils ein Verbindungselement (18) angreift, welches die Steuerungsvorrichtung (1) mit jeweils einem Strömungsschild (22) der Windturbine verbindet;
wobei die Verbindungspunkte (A, B) derart auf der ersten Teilkomponente (12) angeordnet sind, dass sie bezüglich der Rotationsachse (19) einander im Wesentlichen gegenüberliegen und über die Verbindungselemente (18) bei einer Schwenkbewegung der Teilkomponente (12) bedingt durch das Angreifen einer Zentrifugalkraft an dem Massenelement (5), die Strömungsschilde (22) gegensätzlich zueinander steuern:
**dadurch gekennzeichnet, dass** das Federelement (3) Teil einer ersten Komponente (2) und das Massenelement (5) der ersten Teilkomponente (12) Teil einer zweiten Komponente (4) ist und die Steuerungsvorrichtung (1) weiter eine dritte Komponente (7) umfasst, die einen Aktuator (8) aufweist und mit der zweiten Komponente (4) lösbar verbunden ist, und
wobei das Federelement (3) insbesondere ein Torsionselement ist.

2. Windturbinen-Steuerungsvorrichtung gemäß Anspruch 1, wobei die erste Komponente (2) kraftübertragend mit der zweiten Komponente (4) verbunden ist.

3. Windturbinen-Steuerungsvorrichtung gemäß Anspruch 1 oder 2, wobei die zweite Komponente (4) durch Begrenzer (9) auf einen vorher festgelegten Einstellungsbereich begrenzt wird.

4. Windturbinen-Steuerungsvorrichtung gemäß Anspruch 1 bis 3, wobei entweder die zweite Komponente (4) oder die dritte Komponente (7) eine Kopplungsvorrichtung (10) umfasst, welche die zweite (4) und dritte Komponente (7) wahlweise koppelt oder entkoppelt.

5. Windturbinen-Steuerungsvorrichtung gemäß Anspruch 1 bis 4, wobei die dritte Komponente (7) einen Stellmotor (11) umfasst.

6. Windturbinen-Steuerungsvorrichtung gemäß Anspruch 4 bis 5, wobei die Kopplungsvorrichtung (10) durch Kopplung von zweiter (4) und dritter (7) Komponente das zentrifugalkraftbedingte Ausfahren der aerodynamischen Bremse verhindert.

7. Windturbinen-Steuerungsvorrichtung gemäß Anspruch 4 bis 6, wobei die Kopplungsvorrichtung (10) durch Entkopplung von zweiter (4) und dritter (7) Komponente ein zentrifugalkraftbedingtes Ausfahren der aerodynamischen Bremse ermöglicht.

8. Windturbinen-Steuerungsvorrichtung gemäß Anspruch 4 bis 7, wobei die dritte Komponente (7) die erste (2) und zweite Komponente (4) bewegen kann, solange die Kopplungsvorrichtung (10) die dritte Komponente (7) mit der zweiten Komponente (4) koppelt.

9. Windturbinen-Steuerungsvorrichtung gemäß Anspruch 4 bis 8, wobei die Kopplungsvorrichtung (10) eingerichtet ist, die zweite (4) und dritte Komponente (7) zu entkoppeln, wenn die dritte Komponente (7) zumindest teilweise versagt bzw. ausfällt.

10. Windturbinen-Steuerungsvorrichtung gemäß Anspruch 1 bis 9 wobei die erste Teilkomponente (12) zwischen dem ersten und zweiten Ende der ersten Teilkomponente (12) senkrecht zur Rotationsachse fest mit dem Federelement (3) verbunden ist.

11. Windturbinen-Steuerungsvorrichtung gemäß Anspruch 1 bis 10, wobei die zweite Komponente (4) weiter aufweist:
eine zweite Teilkomponente (13), die zwischen dem ersten und dem zweiten Ende der zweiten Teilkomponente (13) senkrecht zur Rotationsachse und senkrecht zur ersten Teilkomponente (12) fest mit dem Federelement (3) verbunden ist.

12. Windturbinen-Steuerungsvorrichtung gemäß irgendeinem der vorhergehenden Ansprüche 1 bis 11, wobei die Strömungsschilde (22) derart an einer Außenfläche des Rotorblatt-Segments (6) positioniert sind, dass die Ebene der Strömungsschilde (22) von einer Position parallel zur Rotationsrichtung des Rotorblatt-Segments (6) wahlweise bis zu einer Position senkrecht zur Rotationsrichtung des Rotorblatt-Segments (6) ausfahrbar sind, so dass die Strömungsschilde (22) sich senkrecht zur Antriebsströmung befinden.

13. Windturbinen-Steuerungsvorrichtung gemäß irgendeinem der vorhergehenden Ansprüche 1 bis 12, wobei die zweite Komponente (4) mit ihrem Massenelement (5) derart positioniert ist, dass das Massenelement (5) bei Drehung des Rotors durch die Zentrifugalkraft radial nach außen bewegt wird.

14. Windturbinen-Steuerungsvorrichtung gemäß irgendeinem der vorhergehenden Ansprüche 1 bis 13, wobei die dritte Komponente (7) weiter aufweist:
ein Rückstellelement, das den Aktuator (8) veranlasst, die aerodynamische Bremse gegen die Vorspannung des Federelements (3) auszufahren, wenn der Aktuator (8) nicht angesteuert wird.

## Claims

1. A wind turbine control device of a vertical axis wind turbine with at least one rotor blade segment (6), comprising:
a spring element (3);
at least one mass element (5) on a first sub-component (12), wherein the first sub-component (12) is mounted such that it can rotate about an axis of rotation (19) ;
at least two connection points (A, B) on the first sub-component (12), on each of which a connecting element (18) engages, which in each case connects the control device (1) with a flow plate (22) of the wind turbine;
wherein the connection points (A, B) are arranged on the first sub-component (12) such that they are essentially opposed to one another with reference to the axis of rotation (19), and control the flow plates (22) in opposite senses to one another via the connecting elements (18) with a pivotal movement of the sub-component (12) conditioned by the action of a centrifugal force on the mass element (5),
**characterised in that**, the spring element (3) is part of a first component (2), and the mass element (5) of the first sub-component (12) is part of a second component (4), and the control device (1) further comprises a third component (7), which has an actuator (8) and is releasably connected with the second component (4), and wherein the spring element (3) in particular is a torsional element.

2. The wind turbine control device in accordance with claim 1, wherein the first component (2) is connected with the second component (4) in a force-transmitting manner.

3. The wind turbine control device in accordance with claim 1 or 2, wherein the second component (4) is limited to a previously defined range of adjustment by means of a limiter (9).

4. The wind turbine control device in accordance with claims 1 to 3, wherein either the second component (4) or the third component (7) comprises a coupling device (10), which couples or decouples the second (4) and third components (7) as required.

5. The wind turbine control device in accordance with claims 1 to 4, wherein the third component (7) comprises a servomotor (11).

6. The wind turbine control device in accordance with claims 4 to 5, wherein by means of the coupling of the second (4) and third (7) components the coupling device (10) prevents the extension outwards of the aerodynamic brake as conditioned by centrifugal force.

7. The wind turbine control device in accordance with claims 4 to 6, wherein by means of the decoupling of the second (4) and third (7) components the coupling device (10) enables an extension outwards of the aerodynamic brake as conditioned by centrifugal force.

8. The wind turbine control device in accordance with claims 4 to 7, wherein the third component (7) can move the first (2) and second components (4), as long as the coupling device (10) is coupling the third component (7) with the second component (4).

9. The wind turbine control device in accordance with claims 4 to 8, wherein the coupling device (10) is equipped to decouple the second (4) and third components (7) if the third component (7), at least partially fails or drops out.

10. The wind turbine control device in accordance with claims 1 to 9, wherein the first sub-component (12) is securely connected with the spring element (3), at right angles to the axis of rotation, between the first and second ends of the first subcomponent (12).

11. The wind turbine control device in accordance with claims 1 to 10, wherein the second component (4) further has:
a second sub-component (13), which is securely connected with the spring element (3), at right angles to the axis of rotation and at right angles to the first sub-component (12), between the first and second ends of the second sub-component (13).

12. The vertical axis wind turbine according to any of the previous claims 1 to 11, wherein the flow plates (22) are positioned on an outer surface of the rotor blade segment (6) such that the plane of the flow plates (22) can be extended outwards from a position parallel to the direction of rotation of the rotor blade segment (6) to a position at right angles to the direction of rotation of the rotor blade segment (6) as required, such that the flow plates (22) are located at right angles to the incident flow.

13. The vertical axis wind turbine according to any of the previous claims 1 to 12, wherein the second component (4) with its mass element (5) is positioned such that in the event of rotation of the rotor the mass element (5) is moved radially outwards by the centrifugal force.

14. The vertical axis wind turbine according to any of the previous claims 1 to 13, wherein the third component (7) further has:
a restoring element, which causes the actuator (8) to extend the aerodynamic brake outwards against the pretension of the spring element (3), if the actuator (8) is not activated.

## Revendications

1. Dispositif de commande d'éolienne pour une éolienne à axe vertical avec au moins un segment de pale de rotor (6), comprenant :
un élément de ressort (3) ;
au moins un élément de masse (5) sur un premier composant partiel (12), moyennant quoi le premier composant partiel (12) est monté de manière rotative autour d'un axe de rotation (19) ;
au moins deux points de liaison (A, B) sur le premier composant partiel (12), au niveau desquels respectivement un élément de liaison (18) est en prise, lequel relie le dispositif de commande (1) à respectivement un déflecteur d'écoulement (22) de l'éolienne ;
moyennant quoi les points de liaison (A, B) sont disposés sur le premier composant partiel (12) de manière à ce qu'ils se situent sensiblement en vis-à-vis l'un de l'autre compte tenu de l'axe de rotation (19) et commandent les déflecteurs d'écoulement (22) de manière opposée l'un à l'autre via les éléments de liaison (18) lors d'un mouvement de pivotement du composant partiel (12) du fait de l'application d'une force centrifuge sur l'élément de masse (5) ;
**caractérisé en ce que** l'élément de ressort (3) est une partie d'un premier composant (2) et l'élément de masse (5) du premier composant partiel (12) étant une partie d'un deuxième composant (4) et le dispositif de commande (1) comprenant par ailleurs un troisième composant (7), lequel présente un actionneur (8) et est relié de manière détachable au deuxième composant (4), et l'élément de ressort (3) étant en particulier un élément de torsion.

2. Dispositif de commande d'éolienne selon la revendication 1, dans lequel le premier composant (2) est relié par transmission de force au deuxième composant (4).

3. Dispositif de commande d'éolienne selon les revendications 1 ou 2, dans lequel le deuxième composant (4) est limité à une plage de réglage préalablement définie grâce à un limiteur (9).

4. Dispositif de commande d'éolienne selon les revendications 1 à 3, dans lequel soit le deuxième composant (4), soit le troisième composant (7) comprend un dispositif de couplage (10), lequel couple ou découple au choix le deuxième (4) et le troisième composant (7).

5. Dispositif de commande d'éolienne selon les revendications 1 à 4, dans lequel le troisième composant (7) comprend un moteur de positionnement (11).

6. Dispositif de commande d'éolienne selon les revendications 4 à 5, dans lequel le dispositif de couplage (10) empêche, grâce au couplage des deuxième (4) et troisième (7) composants, la sortie due à la force centrifuge du frein aérodynamique.

7. Dispositif de commande d'éolienne selon les revendications 4 à 6, dans lequel le dispositif de couplage (10) permet, grâce au découplage des deuxième (4) et troisième (7) composants, une sortie due à la force centrifuge du frein aérodynamique.

8. Dispositif de commande d'éolienne selon les revendications 4 à 7, dans lequel le troisième composant (7) peut faire bouger les premier (2) et deuxième (4) composants aussi longtemps que le dispositif de couplage (10) couple le troisième composant (7) au deuxième composant (4).

9. Dispositif de commande d'éolienne selon les revendications 4 à 8, dans lequel le dispositif de couplage (10) est étudié pour découpler les deuxième (4) et troisième (7) composants lorsque le troisième composant (7) est au moins partiellement défaillant ou défectueux.

10. Dispositif de commande d'éolienne selon les revendications 1 à 9, dans lequel le premier composant partiel (12) est relié de manière fixe à l'élément de ressort (3), entre les première et deuxième extrémités du premier composant partiel (12), perpendiculairement à l'axe de rotation.

11. Dispositif de commande d'éolienne selon les revendications 1 à 10, dans lequel le deuxième composant (4) présente en outre :
un deuxième composant partiel (13), lequel est relié de manière fixe à l'élément de ressort (3), entre les première et deuxième extrémités du deuxième composant partiel (13), perpendiculairement à l'axe de rotation et perpendiculairement au premier composant partiel (12).

12. Dispositif de commande d'éolienne selon l'une quelconque des revendications 1 à 11 précédentes, dans lequel les déflecteurs d'écoulement (22) sont positionnés sur une surface extérieure du segment de pale de rotor (6) de manière à ce qu'il soit possible de déployer le plan des déflecteurs d'écoulement (22) d'une position parallèle au sens de rotation du segment de pale de rotor (6), au choix, jusqu'à une position perpendiculaire au sens de rotation du segment de pale de rotor (6), de sorte que les déflecteurs d'écoulement (22) se situent perpendiculairement à l'écoulement d'attaque.

13. Dispositif de commande d'éolienne selon l'une quelconque des revendications 1 à 12 précédentes, dans lequel le deuxième composant (4) est positionné avec son élément de masse (5) de manière à ce que l'élément de masse (5) soit déplacé radialement vers l'extérieur du fait de la force centrifuge lors de la rotation du rotor.

14. Dispositif de commande d'éolienne selon l'une quelconque des revendications 1 à 13 précédentes, dans lequel le troisième composant (7) présente en outre :
un élément de rappel, lequel incite l'actionneur (8) à faire sortir le frein aérodynamique à l'encontre de la précontrainte de l'élément de ressort (3) lorsque l'actionneur (8) n'est pas commandé.
